# EUROPEAN PATENT APPLICATION

(11) **EP 4 714 801 A1**
(43) Date of publication of application: **25.03.2026**
(21) Application number: 25203192.7
(22) Date of filing: 18.09.2025
(51) Int. Cl.: B62D 35/00

(54) **VEHICLE AIRFLOW DIVERTER**

(30) Priority: 19.09.2024 GB 202413818
(71) Applicant: McLaren Automotive Limited, Woking Surrey GU21 4YH (GB)
(72) Inventor: Algoo, Robin, Woking, GU21 4YH (GB); Saul, Andrew, Woking, GU21 4YH (GB)
(74) Representative: Slingsby Partners LLP

(57) **Abstract**

A vehicle comprising a vehicle body comprising a passenger compartment, a tail region rearward of the passenger compartment and a roof, the roof having an apex above the passenger compartment; and an airflow diverter positioned on the roof at a position between the apex and the tail region, the airflow diverter comprising a guide panel spaced from the roof so as to form a passage between the guide panel and the roof, the passage having an inlet and an outlet, so that when the vehicle is in forward motion, airflow moving rearwardly along the roof enters the passage at the inlet, moves through the passage such that that it is prevented from travelling in a direction away from the roof by the guide panel, and exits the passage at the outlet so as to continue moving rearwardly along the roof.

## Description

### TECHNICAL FIELD

This invention relates to an airflow diverter for improving the flow of air over a vehicle.

### BACKGROUND

In order to maximise vehicle speed and performance, the design of vehicles for many years has included design features which can alter the behaviour of the boundary layer on the roof of vehicle.

As a vehicle is driven forwards and air flows rearwardly over the vehicle roof, a layer of air, known as a boundary layer, is formed near the surface of the roof. Air in the boundary layer moves more slowly than the rest of the rearwardly moving air due to its proximity to and interaction with the surface of the vehicle.

The inventors of the present invention have developed an airflow diverter for the roof of the vehicle which delays the separation of the boundary layer from the roof of the vehicle so as to improve onset airflow to the tail region of the vehicle.

### SUMMARY OF THE INVENTION

According to a first aspect of the present invention there is provided a vehicle comprising a vehicle body comprising a passenger compartment, a tail region rearward of the passenger compartment and a roof, the roof having an apex above the passenger compartment; and an airflow diverter positioned on the roof at a position between the apex and the tail region, the airflow diverter comprising a guide panel spaced from the roof so as to form a passage between the guide panel and the roof, the passage having an inlet and an outlet, so that when the vehicle is in forward motion, airflow moving rearwardly along the roof enters the passage at the inlet, moves through the passage such that that it is prevented from travelling in a direction away from the roof by the guide panel, and exits the passage at the outlet so as to continue moving rearwardly along the roof.

The guide panel may comprise a perimeter, the perimeter comprising a leading edge, a trailing edge and two flanking edges, and a centreline connecting the leading edge and the trailing edge, the centreline being equidistant from the two flanking edges.

The inlet to the passage and the outlet to the passage may be located between the apex and the tail region.

The tail region of the vehicle may terminate in a final rear surface.

The airflow diverter may be located between the apex and the final rear surface.

The inlet to the passage and the outlet to the passage may be located between the apex and the final rear surface.

The inlet to the passage may be at the leading edge.

The outlet to the passage may be at the trailing edge of the guide panel.

The guide panel may be shaped such that the two flanking edges curve downwardly towards the roof.

The tail region of the vehicle body may comprise a rear compartment, the roof may comprise at least one inlet to the compartment and the airflow diverter may be configured to direct the rearwardly moving airflow in a direction towards the inlet to the rear compartment.

The airflow diverter may comprise a connector configured to engage both the guide panel and the roof so as to secure the guide panel to the roof.

The connector may engage the guide panel at a location wholly inboard of the perimeter of the guide panel.

The connector may engage the centreline of the guide panel.

The connector may comprise one or more electrical components for the vehicle.

The connector may comprise an aerial for the vehicle.

The guide panel may comprise a single connector which divides the passage between the guide panel and the roof into two sub-passages.

The guide panel may be configured such that the curvature of the centreline mirrors that of a portion of the roof on which it is positioned.

The guide panel may be configured such that the centreline of the guide panel is angled relative to a portion of the roof on which it is positioned.

The perpendicular distance between the leading edge of the guide panel and the vehicle roof may be greater than the perpendicular distance between the trailing edge of the guide panel and the vehicle roof.

The guide panel may be configured such that the curvature of the guide panel in a direction perpendicular to the centreline is greater at the trailing edge than at the leading edge.

The two flanking edges of the guide panel may engage the roof of the vehicle.

The airflow moving rearwardly along the roof may comprise a boundary layer of air abutting the roof and the airflow diverter may be configured to delay the separation of the boundary layer from the roof.

The airflow diverter may be configured to improve the quality of the rearwardly moving airflow which is incident on the portion of the roof above the tail region of the vehicle.

The tail region may comprise a rear wing and the airflow diverter may be configured to improve the onset airflow to the rear wing.

The inlet to the passage and the outlet to the passage may be located between the apex and the rear wing,

### BRIEF DESCRIPTION OF THE DRAWINGS

Figure 1 illustrates a vehicle of the prior art.
Figure 2 illustrates a vehicle having an airflow diverter.
Figure 3 illustrates a vehicle having an airflow diverter and an inlet to an internal compartment.
Figure 4 illustrates the top view of a vehicle having an airflow diverter and an inlet to an internal compartment.
Figure 5 illustrates a top view of a vehicle having an airflow diverter and a plurality of inlets to an internal compartment.
Figure 6 illustrates a top view of a vehicle having an airflow diverter.
Figure 7 illustrates a front view of an airflow diverter.
Figure 8 illustrates a side view of an airflow diverter.
Figure 9 illustrates a front view of an airflow diverter.
Figure 10 illustrates a side view of an airflow diverter.
Figure 11 illustrates a front view of an airflow diverter.
Figure 12 illustrates a side view of an airflow diverter.
Figure 13 illustrates a side view of an airflow diverter.

### DETAILED DESCRIPTION OF THE DRAWINGS

The following description is presented to enable any person skilled in the art to make and use the invention and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

As described above, as a vehicle is driven forward, rearwardly moving air which contacts the roof of the vehicle forms a boundary layer. The boundary layer initially exhibits laminar flow across the vehicle roof. Laminar flow means that the air forms layers which move smoothly past one another with little mixing. As the rearwardly moving air of the boundary layer flows along the surface of the vehicle's roof, the flow of air transitions from laminar flow to turbulent flow. In turbulent flow, air moves more chaotically and the smooth layers are disrupted, causing mixing of the air. This results in the size of the boundary layer increasing. Due to the reduction in speed and kinetic energy of the air in the boundary layer, the transition to turbulent flow can cause the boundary layer to separate from the roof of the vehicle Thus, as the size of the boundary layer increases, so does the risk of it separating from the roof. Detachment of the boundary layer from the roof is particularly likely when there is a sudden change in the shape of the roof away from the horizontal i.e. where the slope of the roof changes.

When the boundary layer separates from vehicle roof, in the region between the vehicle roof and the separated boundary layer, a zone of highly decelerating and recirculating air is formed.

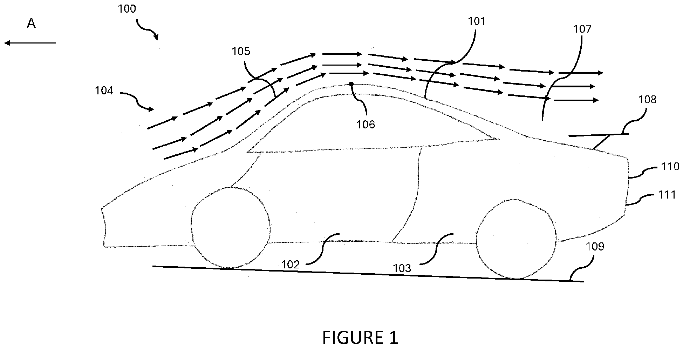

Figure 1 illustrates a vehicle 100 of the prior art. The vehicle 100 has a body which includes a passenger compartment 102, a tail region 103 and a roof 101 which extends across the top of both the passenger compartment and the tail region. As will be explained in more detail below, the tail region may also include a rear compartment. Figure 1 shows that the roof 101 extends in a generally horizontal direction (approximately parallel to the running surface 109 on which the vehicle rests) over the passenger compartment and tail region before reaching the final rear surface of the tail region. The final rear surface of the tail region may be the final rear surface of the vehicle. The final rear surface of the tail region 110 includes the rear bumper 111 of the vehicle. The final rear surface 110 extends in a generally vertical direction (approximately perpendicular to the running surface 109 on which the vehicle rests). In other words, the tail region terminates in the final rear surface 110. The tail region includes a rear wing 108. The rear wing 108 is located at the rear of the tail region. The rear wing 108 is positioned on the portion of the roof 101 which is above the tail region. The rear wing 108 is located forward of the final rear surface 110 and of the rear bumper 111.

Figure 1 also illustrates the rearwardly moving airflow 104 which interacts with the roof 101 of the vehicle as the vehicle is driven forward (in the direction A in figure 1). A boundary layer 105 (represented by the bottom row of arrows) is formed in the rearwardly moving airflow 104 which flows along the roof of the vehicle and over the apex of the roof 106. Figure 1 shows that as the boundary layer passes the apex 106, it starts to detach from the surface of the roof, no longer following the contour of the roof. Therefore, as airflow 104 reaches the tail region 103 of the vehicle, the boundary layer has separated entirely from the vehicle roof. Contact between the boundary layer 105 and the tail region 103 of the vehicle is minimal. A zone of highly decelerating air 107 is formed between the vehicle roof 101 above the tail region and the detached boundary layer.

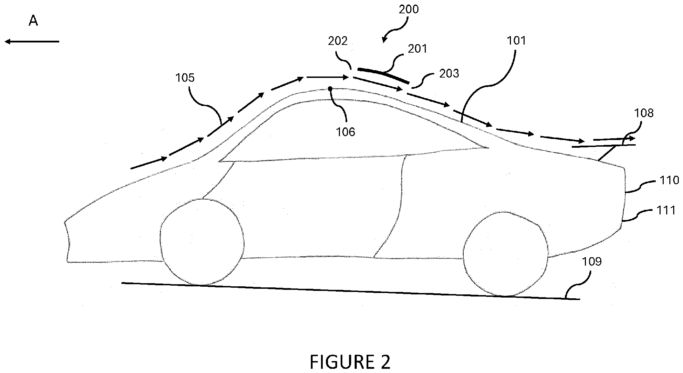

Figure 2 shows the same vehicle 100 which additionally comprises an airflow diverter 200. Figure 2 shows a cross section of the vehicle 100 along the longitudinal axis of the vehicle (the centreline of the vehicle). The airflow diverter is positioned on the roof 101 of the vehicle. The airflow diverter is thus positioned at least partially on the centreline of the vehicle. The airflow diverter comprises a guide panel 201 which is spaced from the roof 101. The cross section seen in figure 2 illustrates a space between the roof 101 and the guide panel 201. That is, although the guide panel may be directly connected to the roof or indirectly connected to the roof via another component of the airflow diverter, the airflow diverter is configured such that a space is formed between the guide panel and the roof. Thus a passage is formed underneath the guide panel which has a front inlet 202 and a rear outlet 203 such that the rearwardly moving airflow 104 passes through the passage. As discussed above, the roof covering the passenger compartment extends in a generally horizontal direction (i.e. approximately parallel to the running surface 109). The guide panel 201 of the airflow diverter located on the roof thus also extends in a direction which is generally horizontal and parallel to the running surface on which the vehicle is positioned. The airflow diverter is thus configured to channel or guide air through the passage in a generally horizontal direction. The airflow diverter is configured to channel or guide air through the passage in a direction which is approximately parallel to the running surface on which the vehicle is positioned. In other words, the airflow diverter guides the airflow 104 so that it stays in close contact with the vehicle roof.

Figure 2 shows that air of the boundary layer 105 passes through the passage. The passage is at least partially enclosed by the vehicle roof and the guide panel. As will be explained in more detail below, depending on how the guide panel is connected to the roof, other components of the airflow diverter may partially enclose the passage. The passage may be an open or closed passage. The guide panel acts to prevent rearwardly moving airflow from travelling away from the roof of the vehicle. Specifically, rearwardly moving air entering the passage via the inlet 202 is prevented from travelling in a direction away from the roof by the guide panel. Instead, the guide panel channels the air in the passage towards the outlet of the passage, which is adjacent the vehicle roof. Therefore, when the air exits the outlet 203, it continues to flow closely along the vehicle roof i.e. following the contour of the vehicle roof. Figure 2 illustrates that when the vehicle 100 is in forward motion, the airflow 104 enters the passage at the inlet 202, moves through the passage such that that it is prevented from travelling in a direction away from the roof by the guide panel 201, and exits the passage at the outlet 203 so as to continue moving rearwardly along the roof.

Figure 2 shows that the airflow diverter guides the airflow 104 including that within the boundary layer 105 so that it stays close to the vehicle roof. In other words, the airflow diverter pulls the boundary layer of the airflow downwards towards the vehicle roof, causing downwash of the boundary layer. Figure 2 shows that air which has passed through the passage of the airflow diverter continues to move rearwardly along the roof rather than moving in a direction away from the roof as in Figure 1.

Figure 2 shows that when the boundary layer passes the apex 106, it does not start to detach from the surface of the roof. In contrast to Figure 1, the boundary layer is still intact and attached to the vehicle roof/ rear wing at the tail region. The airflow diverter is therefore configured to delay the separation of the boundary layer 105 from the vehicle roof. In other words, the boundary layer separates from the vehicle roof rearward of the airflow diverter 200. The contact between the boundary layer and the tail region of the vehicle is thereby increased.

The airflow diverter 200 has the effect of delaying the increase to the size of the boundary layer airflow diverter. The airflow diverter also delays the separation of the boundary layer from the roof and thus the formation of the zone of highly decelerating and recirculating air. The presence of the airflow diverter therefore improves the onset airflow to the tail region of the vehicle. The presence of the airflow diverter may improve the onset airflow to the vehicle's rear wing. In other words, the airflow diverter improves the quality of airflow incident on the vehicle's tail region. It will be appreciated that this effect occurs due to the rear outlet 203 of the airflow diverter 201 being located forward of the tail region (and forward of the rear wing). In other words, the airflow diverter is located upstream of the rear wing. This advantage may be conferred in all driving conditions, for example in strong winds and during cornering.

The airflow diverter 200 is positioned on the roof between the apex 106 of the roof and the tail region. In other words, the airflow diverter is located rearward of the apex of the roof. The airflow diverter is located forward of the tail region 103. The airflow diverter is located forward of the rear wing 108. The airflow diverter is located forward of the rear surface of the tail region 110. The airflow diverter is located forward of the rear bumper 111. The airflow diverter may be positioned anywhere between the apex and the tail region. The airflow diverter may be located at a position on the roof forward of the location at which the boundary layer would usually transition from laminar flow to turbulent flow. The airflow diverter may be located at a position on the roof forward of the location at which the boundary layer would usually start to separate from the vehicle roof. This location will depend on the exact size and shape of the vehicle. It may be advantageous to position the airflow diverter close to the apex 106 of the roof. As explained, the guide panel of the airflow diverter is spaced from the vehicle roof. According to one particular example, the airflow diverter may be positioned immediately rearward of the roof apex 106 and the guide panel may be spaced such that the location of the guide panel is higher than that of the apex of the roof. According to other examples, the airflow diverter may be located further away from the apex and closer to the tail region of the vehicle. According to examples, the entirety of the airflow diverter is located between the apex of the roof and the tail region. In other words, the inlet 202 and outlet 203 are located between the apex of the roof and the tail region. To put it another way, the inlet 202 and outlet 203 are located forward of the tail region. According to other examples, the entirety of the airflow diverter is located between the apex of the roof and the rear wing. In other words, the inlet 202 and outlet 203 are located between the apex of the roof and the rear wing. To put it another way, the inlet 202 and outlet 203 are located forward of the rear wing. In further examples, the entirety of the airflow diverter is located between the apex of the roof and the final rear surface 110 of the vehicle. In other words, the inlet 202 and outlet 203 are located between the apex of the roof and the final rear surface of the vehicle. To put it another way, the inlet 202 and outlet 203 are located forward of the final rear surface.

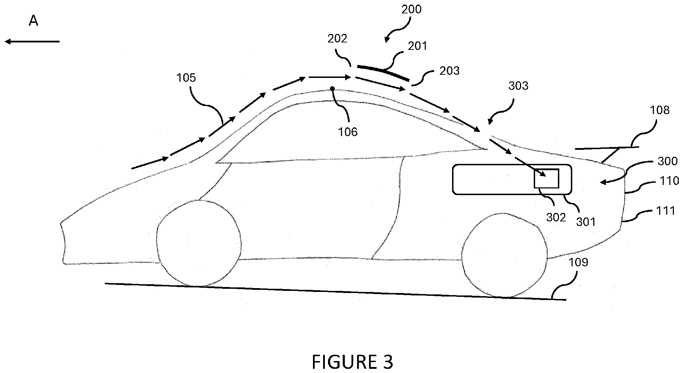

Figure 3 shows the same vehicle 100. Figure 3 illustrates that the tail region 103 of the vehicle includes a rear compartment 300 which houses an exhaust system 301. The rear compartment in the tail region may also house the vehicle engine. The exhaust system may include a muffler or silencer 302 configured to reduce the noise output by the exhaust system 300. The vehicle roof 101 features an inlet 303 in the tail region which provides an opening to the compartment containing the exhaust system 301. The inlet 303 enables air to pass in and out of the compartment. As will be described in more detail below, according to other examples, the vehicle comprises more than one inlet to the compartment housing the exhaust system.

Since the guide panel 201 of the airflow diverter 200 prevents the airflow 104 from travelling in a direction away from the roof, the guide panel simultaneously acts to direct the airflow towards the inlet 303. In other words, the airflow diverter guides the boundary layer downwards towards the vehicle roof and the inlet 303. The airflow diverter therefore encourages airflow of the boundary layer to enter the compartment holding the exhaust system via the inlet 303. The incoming air to the compartment may be used to cool components of the exhaust system, for example the muffler 302. Therefore, as well as the aerodynamic functions described above, the airflow diverter 200 also functions to provide a cooling airflow to the exhaust system and/or the vehicle engine.

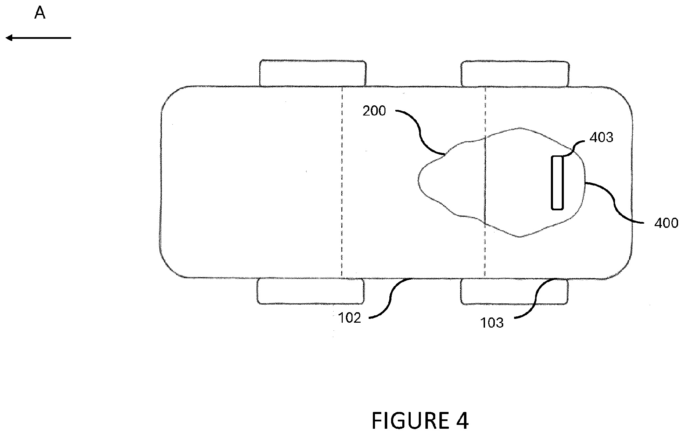

Figure 4 shows an aerial view of the vehicle 100. The vehicle comprises the airflow diverter 200 located on the roof above the passenger compartment 102. The vehicle also comprises a cooling panel 400 located on the roof above the tail region. In the example seen in figure 4, the airflow diverter 200 abuts the cooling panel 400. The cooling panel 400 comprises an inlet 403 to the rear compartment, as described with respect to figure 3.

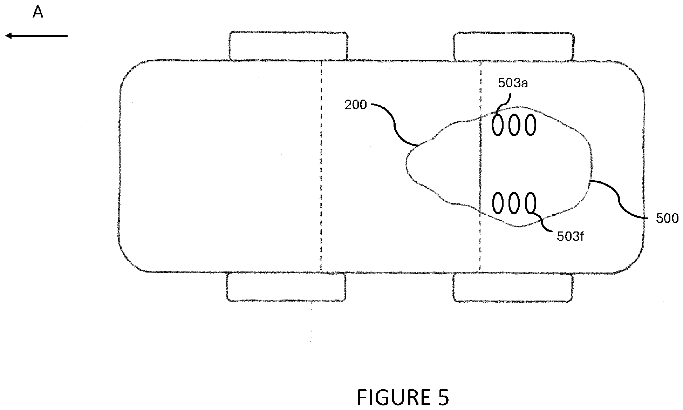

According to another example, seen in figure 5, the cooling panel 500 may comprise a plurality of inlets 503. There may be more than one inlet to the exhaust system compartment. For example, the cooling panel 500 comprises six inlets 503 a-f (only 503a and 503f being labelled), all of which lead to the rear compartment housing the exhaust system. Each inlet may take the form of a vent or louvre.

The airflow diverter may take a number of different forms. As explained, the airflow diverter prevents air that is moving rearwardly along the roof the vehicle from travelling in a direction away from the roof and directs the air towards an inlet (403 or 503) to the rear compartment. There are a number of different shapes and configurations the airflow diverter may take which enable the airflow diverter to perform this function.

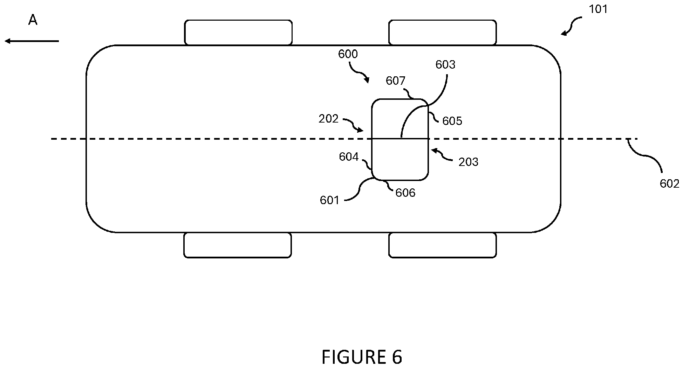

Figure 6 illustrates a top view of the vehicle roof 101 and airflow diverter 600. Figure 6 illustrates a direction A which is the direction the vehicle moves when it is driven forwards. Figure 6 shows that the vehicle has a longitudinal axis 602 which bisects the roof 101. The airflow diverter 600 is located on the longitudinal axis of the vehicle. In other words, a portion of the airflow diverter overlaps with the longitudinal axis of the vehicle 600. In this example, the airflow diverter 600 consists primarily of the guide panel 601. The guide panel 601 seen in figure 6 has a generally rectangular planar shape and a centreline 603. The perimeter of the guide panel comprises a leading edge 604 and an opposite trailing edge 605. The leading edge is located more closely to the front of the vehicle than the trailing edge. The trailing edge is located more closely to the tail region of the vehicle than the leading edge. The perimeter further comprises two flanking edges 606, 607 which are opposite one another. The centreline 603 of the guide panel 601 is equidistant from the two flanking edges 606, 607. The two flanking edges are located on opposite sides of the centreline 603 of the guide panel. The centreline 603 of the guide panel extends between the leading edge 604 and the trailing edge 605. As in the example seen in figure 6, the centreline 603 of the guide panel may be colinear with the longitudinal axis 602 of the vehicle such that the airflow diverter 600 is located centrally with respect to the vehicle.

In the example seen in figure 6, the length of the guide panel (between the leading edge 604 and the trailing edge 605) is less than the width of the guide panel (between the flanking edges 606, 607). In this example, the width of the guide panel is approximately equal to a third of the width of the vehicle 100. However, according to other examples, the dimensions of the guide panel may be different, for example the length of the guide panel may be greater than its width. The width of the guide panel may be greater than the example seen in figure 6. For example, the width of the guide panel could be almost equal to the width of the vehicle roof such that the guide panel occupies almost the entire width of the vehicle roof 101.

In this example, the guide panel has a generally rectangular shape such that the edges 604, 605, 606, 607 are straight and perpendicular to one another. It will be appreciated that according to other examples, the guide panel may have a less regular shape (e.g. similar to that seen in figures 4 and 5) such that the four edges may be partially curved and may not all be strictly perpendicular to one another.

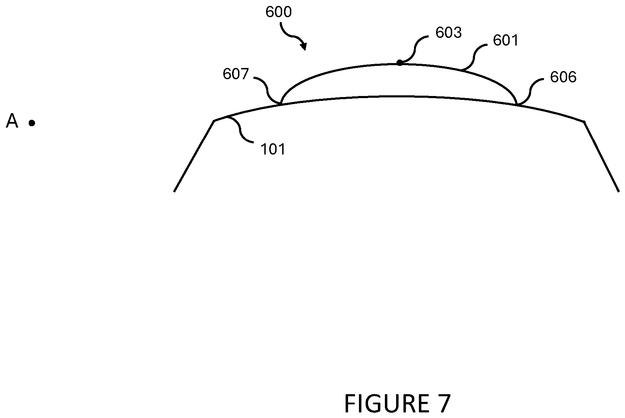

Figure 7 illustrates a front view of the vehicle roof 101 including airflow diverter 600. As shown, direction A is coming out of the page of the view seen in figure 7. Figure 7 illustrates that the guide panel has a curved configuration. The guide panel has a concave shape. The guide panel curves in a direction perpendicular to its centreline 603. The flanking edges 606, 607 curve away from the centreline of the guide panel 601 in a direction towards the vehicle roof 101. The guide panel is symmetrical about its centreline. The two flanking edges 606, 607 curve downwards such that the highest point of the guide panel is the centreline 603. In other words, the portions of the guide panel either side of its centreline 603 curve downwards towards the vehicle roof. The guide panel curves in a direction perpendicular to the centreline 603 and perpendicular to the longitudinal axis 602 of the vehicle. Figure 7 shows that a cross section of the guide panel has an arch shape. It will be appreciated that although in this example, the flanking edges curve downwards towards the vehicle, according to other examples, the flanking edges could be curved upwards, away from the vehicle. According to a further example, the flanking edges may not curve at all.

In the example seen in figure 7, the guide panel curves such that the flanking edges 606, 607 meet the roof of the vehicle 101. The two flanking edges engage the vehicle roof. As explained above, the guide panel forms a passage which has a front inlet 202 and a rear outlet 203 such that rearwardly moving airflow passes through the passage when the vehicle is undergoing forward motion (in the direction A). As illustrated in figure 6, the inlet 202 to the passage is located at the leading edge 604. The outlet 203 to the passage is located at the trailing edge 605. The inlet and outlet are both formed by the vehicle roof 101 and the guide panel 601. The passage is enclosed by the vehicle roof 101 and the guide panel 601 which curves towards and engages the roof at the flanking edges 605, 606. In this example, no other surfaces make up the walls to the passage. In other words, the guide panel and the vehicle roof together enclose the passage between its inlet and outlet.

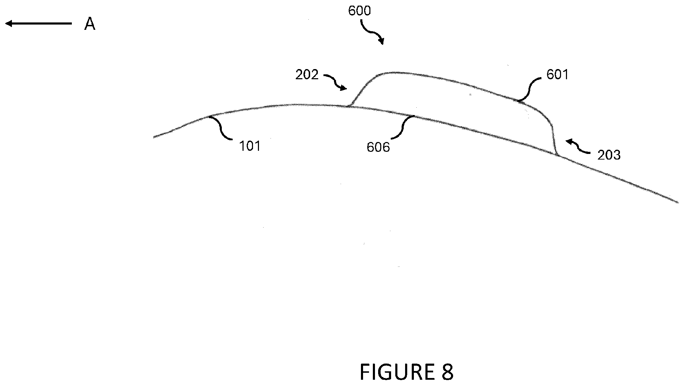

Figure 8 shows a side view of the airflow diverter 600. Figure 8 shows that, according to this example, flanking edge 606 engages the vehicle roof 601 along its entire length. The same is true of the other flanking edge 607. Since both flanking edges engage the roof along their entire lengths, there are no other openings to the passage except from the inlet 202 and outlet 203. The type of passage defined by airflow diverter 600 will be referred to herein as a closed passage.

As will be explained in more detail below, other designs of the airflow diverter may form open passages in which the passage has at least one opening in addition to the inlet and outlet. It will be appreciated that for some variants of the airflow diverter 600, the flanking edges may not engage the roof along their entire length. For example, the guide panel may have a more curved shape towards the rear trailing edge 605 than at the front leading edge 604. The guide panel may be shaped such that the curvature of the guide panel in a direction perpendicular to its centreline 603 is greater at the trailing edge than at the leading edge. The flanking edges may therefore curve down and meet the vehicle roof only in the region proximal to the trailing edge. The passage formed by the guide panel and the vehicle roof may therefore be closed near the trailing edge but open near the leading edge such that the passage has additional side openings near the leading edge. The airflow diverter may therefore form a passage which is partially closed.

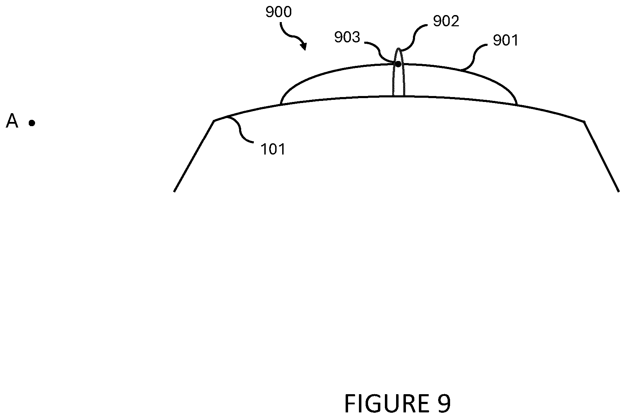

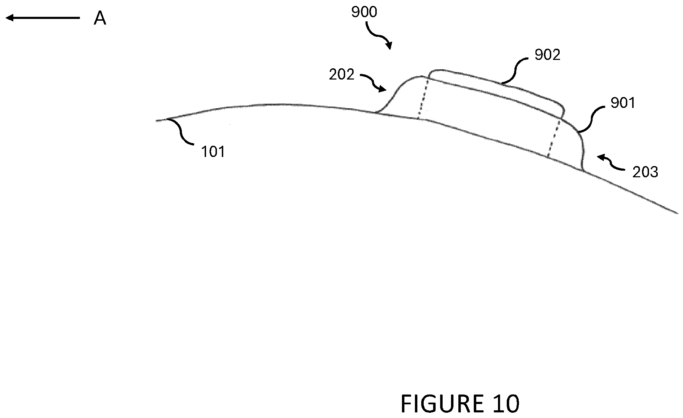

Figure 9 illustrates a front view of the vehicle roof including airflow diverter 900. Airflow diverter 900 has a similar form to airflow diverter 600 seen in figures 6 to 8. **In** addition to a guide panel 901 similar to guide panel 601, the airflow diverter comprises a connector 902. The connector 902 engages the guide panel 601 and the vehicle roof 101 so as to secure the guide panel to the roof. Figure 10 illustrates a side view of the same airflow diverter 900.

In this example, the connector 902 has an elongate, planar shape which extends parallel to the longitudinal axis 602 of the vehicle. In this example, the airflow diverter 900 has a single connector 902. The airflow diverter has a single central connector. The connector 902 engages the guide panel 901 at least partially along its centreline 903. The guide panel 901 is thus symmetric about the connector 902. The connector 902 engages the vehicle roof 101 along the longitudinal axis of the vehicle. The connector 902 engages the guide panel 901 at a location wholly inboard of the perimeter of the guide panel. In other words, the connector does not contact any of the edges of the guide panel 604, 605, 606, 607. An area of the guide panel adjacent each edge of the guide panel is not engaged by the connector. The connector does not engage the guide panel along the entire length of the guide panel such that an area of the guide panel exists between the leading edge and the connector and between the trailing edge and the connector.

Since the connector 902 engages the vehicle roof and the guide panel 901 along its centreline, the connector divides the passage created by the guide panel and vehicle roof. Along at least some of its length, the passage is divided into two sub-passages by the connector 902. Figure 10 shows that, due to the fact the connector does not extend along the full length of the guide panel, the passage maintains a single inlet 202 and a single outlet 203. However, in between the inlet and outlet, the passage is divided into two sub-passages either side of the connector (seen in figure 9). The two sub-passages may be equal in volume. As above, the connector has an elongate planar shape extending parallel to the longitudinal axis of the vehicle. The width of the connector may be minimised in order to minimise blockage of the rearwardly moving air entering the passage through the inlet caused by the front face of the connector.

The connector may house one or more electrical components for the vehicle. For example, the aerial for the vehicle may be contained within the connector. Therefore, as seen in figures 9 and 10, the height of the connector may be greater than that of the guide panel. The connector may extend above the guide panel. The connector may house other electrical components, for example, brake lights.

According to other examples, the connector may have a more linear shape, for example the connector may take the form of a rod or dowel. The connector may engage the guide panel at at least one point along the centreline of the guide panel. The guide panel may be secured to the vehicle roof using more than one connector where each connector engages the guide panel at a point along the centreline of the guide panel.

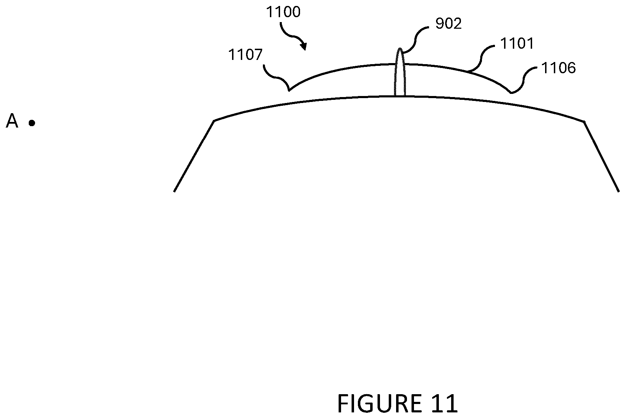

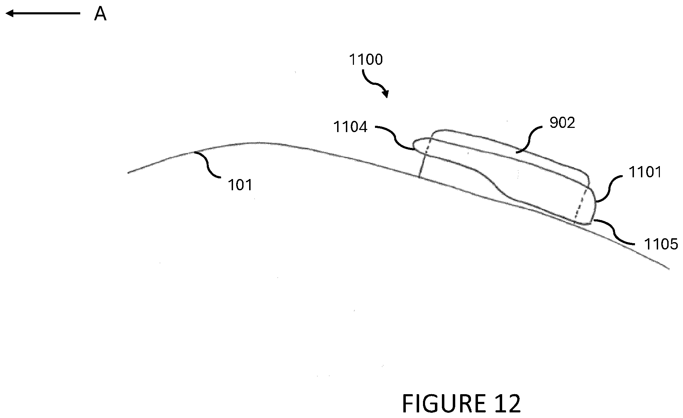

Figure 11 illustrates a front view of the vehicle roof including an airflow diverter 1100. Figure 12 shows the airflow diverter 1100 viewed from the side. Airflow diverter 1100 has a similar form to airflow diverter 900 seen in figures 9 and 10. The guide panel 1101 of the airflow diverter 1100 has the same curved configuration as previously described with respect to the airflow diverters 600, 900. The flanking edges 1106, 1107 curve away from the centreline of the guide panel 1101 in a direction downwards towards the vehicle roof 101. However, in contrast to the airflow diverter 900, the flanking edges 1106, 1107 of the guide panel do not curve so as to engage the roof along their entire lengths. In the example seen in figures 11 and 12, the flanking edges of the guide panel 1101 airflow diverter 1100 do not make contact with the roof at all. The airflow diverter may therefore have a "T" shape.

The airflow diverter 1100 has the same connector 902 as previously described with respect to airflow diverter 900. The passage formed by the guide panel of the airflow diverter 1100 is therefore divided by the connector 902 into two sub-passages on either side of the connector along at least some of its length. Figure 12 shows that, due to the fact the connector does not extend along the full length of the guide panel, the passage maintains the inlet 202 and outlet 203. However, since the flanking edges of the guide panel do not engage the vehicle roof, each sub-passage also has an additional side opening adjacent its respective flanking edge. In other words, the passage comprises two side openings, one at each flanking edge 1106, 1107. The passage formed by the airflow diverter 1100 is therefore an open passage comprising two open sub-passages. As described, the flanking edges 1106, 1107 of the airflow diverter provide exposed edges which do not make contact with the vehicle roof. The guide panel 1101 of airflow diverter 1100 extends in a direction perpendicular to its centreline between the exposed flanking edge 1106 and the exposed flanking edge 1107. The airflow diverter 1100 may be configured to improve the stability of the airflow to downstream aerodynamic devices, such as the rear wing. This is due to generation of vortices at the exposed flanking edges which serve to contain the rearwardly moving airflow exiting the device that flows towards the rear wing.

As previously described, airflow exiting the passage of the airflow diverter at the outlet may be used for cooling components of the exhaust system. As seen in figure 5, the vehicle may comprise a cooling panel 500 located on the vehicle roof above the tail region. The cooling panel 500 is located rearward of the airflow diverter. In the examples shown the cooling panel abuts the airflow diverter. The cooling panel 500 may comprise one or more inlets to the exhaust system compartment and/or the engine bay. As seen in figure 5, the example cooling panel comprises a plurality of inlets 503a-f. A number of the inlets are located directly rearward of the flanking edges of the guide panel of the airflow diverter 200.

As described above, a region of recirculating air is formed as the boundary layer begins to separate from the vehicle roof (rearward of the airflow diverter). The inlets 502a-f may be positioned relative to the airflow diverter so as to coincide with the location of this region of air such that it can be used for cooling the vehicle components in the tail region. Positioning inlets of the cooling panel such that recirculating air is sucked into the vehicle's rear compartment may therefore have positive aerodynamic effects by promoting smooth airflow along the roof of the vehicle's tail region and optionally to the rear wing.

As mentioned above, the guide panel may be shaped such that the curvature of the guide panel in a direction perpendicular to its centreline is not uniform along the entire length of the centreline. For example, the curvature of the guide panel in a direction perpendicular to its centreline may be greater at the trailing edge than at the leading edge. As explained, this may result in an airflow diverter which forms a passage that is partially closed (for example near the trailing edge) and partially open (for example near the leading edge).

The airflow diverter 1100 seen in figure 11 forming an open passage may therefore also have a curvature in a direction perpendicular to its centreline which is not uniform along the length of the centreline. For example, the curvature of the guide panel in a direction perpendicular to its centreline may be greater at the trailing edge than at the leading edge. This configuration is illustrated in figure 12 which shows a side view of the airflow diverter 1100. The flanking edges therefore curve downwards more acutely in the region proximal to the trailing edge 1105 that in the region proximal to the leading edge 1104. As seen in figure 12, in the region closer to the trailing edge 1105, the flanking edges are closer to contacting the vehicle roof than in the region closer to the leading edge 1104. The side opening in each open sub-passage is therefore smaller at the rear of the airflow diverter than at the front of the airflow diverter. The guide panel may also have a non-uniform width i.e. the distance between the two flanking edges may not be uniform along the length of the centreline. The distance between the two flanking edges may vary along the length of the guide panel. The width of the guide panel may be greater closer to the trailing edge than at the leading edge. In other words, the width of the guide panel may increase between the leading edge and trailing edge. The difference in width of the guide panel either alone or in combination with the difference in curvature may result in the side openings in each open sub-passage being smaller at the rear of the airflow diverter than at the front of the airflow diverter.

It will be appreciated from figure 12 that the guide panel 1101 may have a wing-like shape. A similar shape is shown in figures 5 and 6. In each case, the airflow diverter has a non-uniform width and the two flanking edges of the guide panel are at least partially curved. In figures 5 and 6, the two flanking edges are seen generally to curve away from the longitudinal axis of the vehicle at the rear of the airflow diverter. The airflow diverter's widest portion may be at its trailing edge. The airflow diverter's narrowest point may be at its leading edge. The airflow diverter may have a portion converging to a tip at its leading edge (e.g. seen in figures 5 and 6).

The guide panel of each airflow diverter described thus far also has a slight curvature along the centreline of the respective guide panel. In the example airflow diverters described above, the guide panel is gently curved along its centreline so as to broadly mirror the curvature of the vehicle roof on which the airflow diverter is positioned.

Therefore in the examples seen in figures 7 to 12, the perpendicular distance between the centreline of each guide panel and the vehicle roof is approximately equal along the centreline of the guide panel. The same is true of any line extending along the guide panel between the inlet 202 and outlet 203. In other words, for any cross section of the airflow diverter taken along a line parallel to the centreline of the guide panel, the height of the passage formed underneath that cross section is approximately uniform along its length. To put it another way, for any cross section of the airflow diverter taken along a line parallel to the centreline of the guide panel, the perpendicular distance between the vehicle roof and any point on that cross section will be approximately equal along the length of the airflow diverter. The passage formed under the guide panel may have a constant width between the inlet 202 and outlet 203. Each cross section of the airflow diverter taken along a line parallel to the centreline of the guide panel may have a curvature which mirrors the portion of roof directly underneath it.

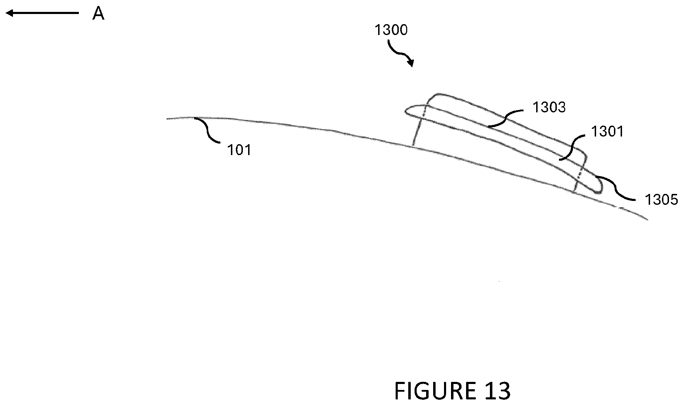

Figure 13 shows a further example of an airflow diverter 1300 which has a similar form to airflow diverter 1100 previously described. The flanking edges of the guide panel 1301 of airflow diverter 1300 do not make contact with the vehicle roof such that an open passage is formed underneath the guide panel. Figure 13 shows that the curvature of the guide panel along the centreline 1303 of the guide panel is not constant along its length. The centreline of the guide panel curves or slants towards the vehicle roof at the trailing edge 1305. In other words, the centreline of the guide panel is angled relative to the vehicle roof such that the guide panel points downwards towards the tail region of the vehicle. Therefore, the perpendicular distance between the centreline 1303 of the guide panel and the vehicle roof is greater at the leading edge than at the trailing edge. The height of the passage formed underneath the guide panel of airflow diverter 1300 therefore decreases between the inlet and the outlet. In other words, the guide panel 1301 slants or pinches in towards the roof of the vehicle 101 as the airflow moves rearwardly through the passage. This means that the flanking edges of the guide panel also get closer to the vehicle roof towards the trailing edge. In other words, the distance between the flanking edges of the guide panel and the vehicle roof is greater near to the leading edge than near to the trailing edge. In fact, for any cross section of the airflow diverter 1300 taken along a line parallel to the centreline of the guide panel, the perpendicular distance between the vehicle roof and any point on that cross section decreases in a direction towards the rear of the vehicle. For any cross section of the airflow diverter 1300 taken along a line parallel to the centreline of the guide panel, the perpendicular distance between the vehicle roof and any point on the cross section is smaller closer to the trailing edge that at the leading edge.

The designs of airflow diverters 1100 and 1300 may introduce further aerodynamic benefits. For example, the fact that the flanking edges of the guide panel get closer to the vehicle roof towards the trailing edge can result in the airflow diverter causing increased downwash on the air of the boundary layer, which may further improve the onset airflow to the tail region of vehicle.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

### ANNEX TO THE DESCRIPTION

1. A vehicle comprising:
   a vehicle body comprising a passenger compartment, a tail region rearward of the passenger compartment and a roof, the roof having an apex above the passenger compartment; and
   an airflow diverter positioned on the roof at a position between the apex and the tail region, the airflow diverter comprising a guide panel spaced from the roof so as to form a passage between the guide panel and the roof, the passage having an inlet and an outlet, so that when the vehicle is in forward motion, airflow moving rearwardly along the roof enters the passage at the inlet, moves through the passage such that that it is prevented from travelling in a direction away from the roof by the guide panel, and exits the passage at the outlet so as to continue moving rearwardly along the roof.
2. The vehicle of 1, wherein:
   the guide panel comprises a perimeter, the perimeter comprising a leading edge, a trailing edge and two flanking edges, and a centreline connecting the leading edge and the trailing edge, the centreline being equidistant from the two flanking edges;
   the inlet to the passage is at the leading edge; and
   the outlet to the passage is at the trailing edge of the guide panel.
3. The vehicle of 2, wherein the guide panel is shaped such that the two flanking edges curve downwardly towards the roof.
4. The vehicle of any of 1 to 3, wherein the tail region of the vehicle body comprises a rear compartment, the roof comprises at least one inlet to the compartment and the airflow diverter is configured to direct the rearwardly moving airflow in a direction towards the inlet to the rear compartment.
5. The vehicle of any of 1 to 4, wherein the airflow diverter comprises a connector configured to engage both the guide panel and the roof so as to secure the guide panel to the roof.
6. The vehicle of 5 as dependent on any of 2 to 4, wherein the connector engages the guide panel at a location wholly inboard of the perimeter of the guide panel.
7. The vehicle of 5 as dependent on any of 2 to 4, or 6, wherein the connector engages the centreline of the guide panel.
8. The vehicle of 5 as dependent on any of 2 to 4, or 6 or 7, wherein the connector comprises one or more electrical components for the vehicle.
9. The vehicle of 8, wherein the connector comprises an aerial for the vehicle.
10. The vehicle of any of 2 to 9, wherein the guide panel is configured such that the curvature of the centreline mirrors that of a portion of the roof on which it is positioned.
11. The vehicle of 2, 3, or any of 4 to 9 when dependent on 2, wherein the guide panel is configured such that the centreline of the guide panel is angled relative to a portion of the roof on which it is positioned.
12. The vehicle of 2, 3, or any of 4 to 11 when dependent on 2, wherein the perpendicular distance between the leading edge of the guide panel and the vehicle roof is greater than the perpendicular distance between the trailing edge of the guide panel and the vehicle roof.
13. The vehicle of 2, 3, or any of 4 to 12 when dependent on 2, wherein the guide panel is configured such that the curvature of the guide panel in a direction perpendicular to the centreline is greater at the trailing edge than at the leading edge.
14. The vehicle of 2, 3, or any of 4 to 13 when dependent on 2, wherein the two flanking edges of the guide panel engage the roof of the vehicle.
15. The vehicle of any of 1 to 14, wherein the airflow moving rearwardly along the roof comprises a boundary layer of air abutting the roof and the airflow diverter is configured to delay the separation of the boundary layer from the roof.
16. The vehicle of 15, wherein the airflow diverter is configured to improve the quality of the rearwardly moving airflow which is incident on the portion of the roof above the tail region of the vehicle.
17. The vehicle of 16, wherein the tail region comprises a rear wing and the airflow diverter is configured to improve the onset airflow to the rear wing.

## Claims

1. A vehicle comprising:
a vehicle body comprising a passenger compartment, a tail region rearward of the passenger compartment and a roof, the roof having an apex above the passenger compartment; and
an airflow diverter positioned on the roof at a position between the apex and the tail region, the airflow diverter comprising a guide panel spaced from the roof so as to form a passage between the guide panel and the roof, the passage having an inlet and an outlet, so that when the vehicle is in forward motion, airflow moving rearwardly along the roof enters the passage at the inlet, moves through the passage such that that it is prevented from travelling in a direction away from the roof by the guide panel, and exits the passage at the outlet so as to continue moving rearwardly along the roof.

2. The vehicle of claim 1, wherein:
the guide panel comprises a perimeter, the perimeter comprising a leading edge, a trailing edge and two flanking edges, and a centreline connecting the leading edge and the trailing edge, the centreline being equidistant from the two flanking edges;
the inlet to the passage is at the leading edge; and
the outlet to the passage is at the trailing edge of the guide panel.

3. The vehicle of claims 1 or 2, wherein the inlet to the passage and the outlet to the passage are located between the apex and the tail region.

4. The vehicle of any preceding claim, wherein the tail region of the vehicle terminates in a final rear surface.

5. The vehicle of claim 4, wherein the airflow diverter is located between the apex and the final rear surface.

6. The vehicle of claims 4 or 5, wherein the inlet to the passage and the outlet to the passage are located between the apex and the final rear surface.

7. The vehicle of claim 2 or of any of claims 3 to 6 when dependent on claim 2, wherein the guide panel is shaped such that the two flanking edges curve downwardly towards the roof.

8. The vehicle of any preceding claim, wherein the airflow diverter comprises a connector configured to engage both the guide panel and the roof so as to secure the guide panel to the roof and optionally, wherein the connector engages the guide panel at a location wholly inboard of the perimeter of the guide panel.

9. The vehicle of claim 8 when dependent on claim 2 or on any of claims 3 to 8 when dependent on claim 2, wherein the connector engages the centreline of the guide panel.

10. The vehicle of claims 8 or 9, wherein the guide panel comprises a single connector which divides the passage between the guide panel and the roof into two sub-passages.

11. The vehicle of claim 2 or any of claims 3 to 10 when dependent on claim 2, wherein the guide panel is configured such that the curvature of the centreline mirrors that of a portion of the roof on which it is positioned.

12. The vehicle of claim 2 or any of claims 3 to 11 when dependent on claim 2, wherein the perpendicular distance between the leading edge of the guide panel and the vehicle roof is greater than the perpendicular distance between the trailing edge of the guide panel and the vehicle roof.

13. The vehicle of claim 2 or any of claims 3 to 12 when dependent on claim 2, wherein the guide panel is configured such that the curvature of the guide panel in a direction perpendicular to the centreline is greater at the trailing edge than at the leading edge.

14. The vehicle of any preceding claim, wherein the tail region comprises a rear wing and the airflow diverter is configured to improve the onset airflow to the rear wing.

15. The vehicle of claim 14, wherein the inlet to the passage and the outlet to the passage are located between the apex and the rear wing.
